# FASCICULE DE BREVET EUROPEEN

(11) **EP 1 101 516 B1**
(45) Date de publication et mention de la délivrance du brevet: **29.03.2006**
(21) Numéro de dépôt: 00403011.0
(22) Date de dépôt: 30.10.2000
(51) Int. Cl.: B01D 15/08, C07C 7/12, C07C 15/067, B01D 15/02

(54) **Procédé pour déterminer par simulation les conditions optimales de stabilisation d'un système de separation à lit mobile simulé**
Verfahren zur Bestimmung optimaler Bedingungen der Stabilisierung eines Trennungssystems eines simulierten Wanderbettes durch Simulation
Process for determining by simulation optimal conditions of stabilising a separation system of simulated moving bed

(30) Priorité: 22.11.1999 FR 9914763
(43) Date de publication de la demande: 23.05.2001
(73) Titulaire: Institut Français du Pétrole, 92852 Rueil-Malmaison Cedex (FR)
(72) Inventeur: Pavone, Didier, 69130 Ecully (FR)

(56) Documents cités:
- US-A- 5 470 482
- US-A- 5 902 486
- T.PRÖLL ET AL: "Optimization strategy for simulated moving bed systems" JOURNAL OF CHROMATOGRAPHY, vol. 800, 1998, pages 135-150, XP004113589 Amsterdam,nl
- M.M.HASSAN ET AL.: "Modelling of simulated moving bed adsorption system" SEPARATIONS TECHNOLOGY, vol. 5, 1995, pages 77-89, XP002147787 Ireland

## Description

La présente invention concerne un procédé pour déterminer par simulation les conditions optimales de stabilisation d'un système de séparation à lit mobile simulé permettant d'atteindre rapidement des valeurs de consigne fixées pour la pureté d'un constituant extrait et pour le rendement de l'installation.

La méthode s'applique notamment à la séparation des hydrocarbures aromatiques ou des isomères optiques.

Il existe dans l'industrie de nombreux procédés de séparation continue par adsorption sélective d'au moins un composant parmi plusieurs au sein d'un mélange de fluides, notamment des procédés de chromatographie où l'on utilise la propriété de certains solides poreux, en présence de mélanges liquides, gazeux ou supercritiques, de retenir plus ou moins fortement les différents constituants du mélange.

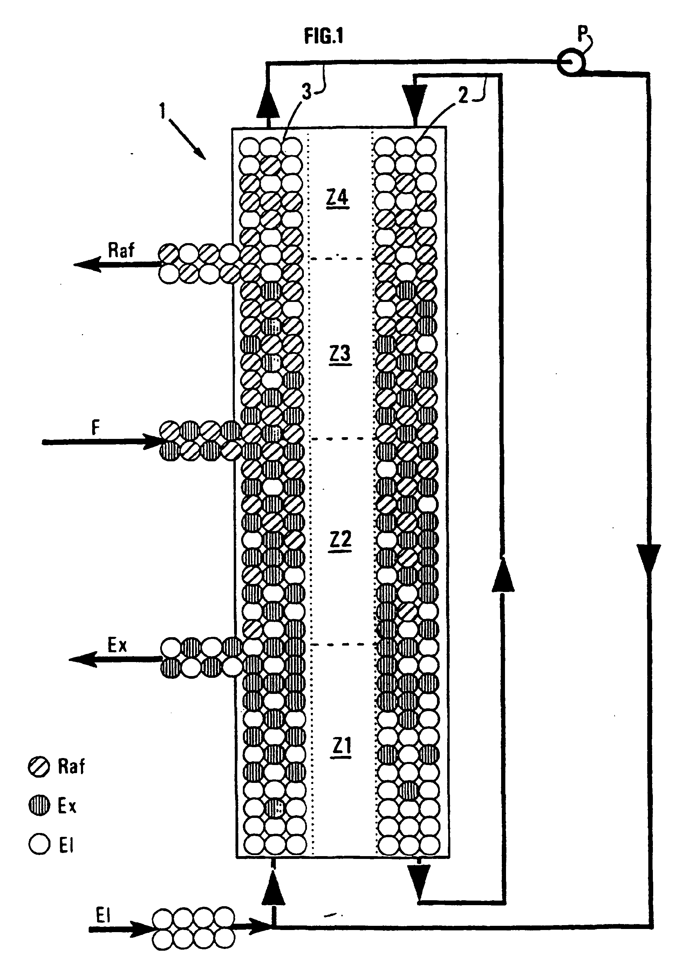

Les procédés de séparation ou fractionnement basés sur la chromatographie sont le plus souvent mis en oeuvre dans un dispositif comportant (Fig.1) un ensemble de k colonnes ou tronçons de colonnes chromatographiques montées en séries (en général, 4 ≤ k ≤ 24) formant une boucle ouverte ou fermée. Un solide poreux, de granulométrie déterminée, réparti en différents lits, constitue la phase stationnaire.

Le long de cette boucle, sont répartis des points d'injection pour le mélange à séparer F comprenant au moins deux constituants A, B et le solvant ou désorbant, et des points de soutirage de fluides délimitant le plus souvent quatre zones Z1, Z2, Z3, Z4, le constituant préférentiellement recherché se trouvant en majorité soit dans l'extrait (Ex) soit dans le raffinat (Raf). Toutes les colonnes ou fractions de colonne d'une même zone sont traversées par un débit liquide identique. Dans un procédé à contre courant réel, un profil des concentrations fixe et constant se développe le long d'une colonne 1 de séparation (Fig.1), où la position des points d'injection d'une charge A+B, d'un éluant S, et de soutirage d'un extrait Ex et d'un raffinat Raf reste fixe. Le solide adsorbant 3 et le liquide 2 se déplacent à contre courant. Un système d'entraînement du solide et une pompe P de recyclage, placés tous les deux à l'emplacement de la colonne (à la jonction des zones Z1 et Z4 où la seule espèce présente tant dans le liquide que dans le solide est le fluide vecteur d'élution), permettent de renvoyer respectivement le solide de la base vers le sommet, et le liquide inversement du sommet vers la base.

Les procédés dits à contre-courant simulé (CCS) ou à lit mobile simulé (LMS) permettent on le sait, d'échapper à une difficulté majeure inhérente aux procédés à lit mobile vrai, celle de faire correctement circuler la phase solide sans créer d'attrition et sans augmenter considérablement la porosité de lit par rapport à celle d'un lit fixe. Pour simuler son déplacement, le solide est disposé dans un certain nombre n de lits fixes disposés en série et c'est le profil des concentrations que l'on déplace à vitesse sensiblement uniforme tout autour d'une boucle ouverte ou fermée, en déplaçant les points d'injection et de soutirage.

En pratique, le décalage successif de ces points d'injection et de soutirage se fait à l'aide d'une vanne rotative ou plus finement d'un ensemble de vannes tout ou rien convenablement commandées. Ce décalage circulaire, effectué à chaque période, des différents débits liquides d'entrée-sortie dans un sens donné, revient à simuler un déplacement de l'adsorbant solide dans l'autre sens.

Les principaux débits liquides d'entrée sont les suivants : le débit de charge Q_{F} et le débit d'éluant Q_{El}. Les débits de sortie sont le débit d'extrait et le débit de raffinat. L'un au moins de ces flux (raffinat, éluant, extrait) est prélevé ou introduit sous contrôle de pression. Le débit de raffinat Q_{Raf} est égal à la somme des débits d'entrée Q_{F} et Q_{El} moins le débit d'extrait Q_{Ex}. A ces débits contrôlés s'ajoute un débit de recyclage Q_{Rec}. Les emplacements respectifs des quatre flux autour des lits, définissent ainsi quatre zones distinctes.

Parmi les procédés connus, on peut citer le procédé Eluxyl™ décrit notamment dans les brevets suivants: EP 415.822 (US 5,114,590) ou FR 2.762.793 (US 5,902,486).

La détermination des paramètres nécessaires au fonctionnement d'une boucle de séparation est difficile car les variables intervenant dans le processus sont nombreuses.

Pour une concentration d'alimentation donnée, on peut trouver ces débits de manière empirique mais la solution optimale se trouve dans une zone restreinte d'un espace à quatre dimensions (trois débits liquides et soit le débit de solide dans le cas d'un lit mobile vrai, soit la période de permutation T dans le cas d'un lit mobile simulé, le débit de raffinat se déduisant des autres débits), qui ne peut être atteinte par tâtonnements qu'après un temps considérable, sans que l'on soit certain d'être au point optimal.

Afin de trouver les conditions optimales pour piloter ou dimensionner un système de séparation à lit mobile vrai (LMV) ou simulés (LMS), il est bien préférable de trouver un modèle représentatif du processus de séparation, prenant en compte les phénomènes d'adsorption, le transfert de matière et les propriétés de l'écoulement du fluide à travers la phase solide poreuse et de remplacer l'approche empirique lourde par des simulations. Cette voie d'approche par simulation peut cependant se révéler tout aussi lourde si elle n'est pas bien conduite.

En général on optimise les procédés selon une optimisation statique, par la technique connue d'essai et erreur. On part d'un jeu de données, (des débits par exemple) choisi a priori. On fait une simulation jusqu'à obtenir un régime stabilisé (d'où le terme statique), et l'on enregistre les performances obtenues. Après une légère modification d'une donnée d'entrée, on refait une simulation pour mesurer la sensibilité des performances à cette modification. On itère sur toutes les données pour déterminer pareillement leurs influences respectives sur l'évolution des performances. On modifie alors les données d'entrée dans le sens d'une amélioration des performances.

Il existe de nombreuses stratégies pour conduire le calcul des sensibilités et déterminer la façon de modifier les données. Mais toutes présentent plus ou moins les mêmes inconvénients. Elles nécessitent de nombreuses simulations, donc un temps de calcul non négligeable. Elles sont aveugles et ne tirent pas profit d'une connaissance que l'on pourrait avoir a priori. Elles trouvent une solution si elles sont initialisées près de cette solution mais divergent la plupart du temps si elles sont initialisées trop loin de la solution recherchée. De plus, elles peuvent « tomber » dans un minimum local et n'en plus sortir.

### Le procédé selon l'invention

Le procédé selon l'invention s'applique à un système de séparation du type à lit mobile simulé (LMS) comprenant une série de lits contenant de la matière solide adsorbante, répartis en plusieurs zones délimitées par des points d'injection d'une charge et d'un éluant et des points de soutirage d'un extrait et d'un raffinat, des moyens d'injection de fluides, des moyens d'extraction de fluides, des moyens de permutation des points d'injection et des points d'extraction, et des moyens de mesure de variables opératoires. Le procédé permet de déterminer rapidement les débits de fluides injectés et les débits de fluides soutirés optimaux pour obtenir un degré de pureté (P) et un rendement d'extraction (R) fixés pour au moins un constituant dans l'extrait (Ex).

Il comporte une simulation unique de type dynamique avec une succession d'étapes de rectification des débits de fluides à intervalles de temps de durée limitée, comprenant chacune, à l'issue de chaque intervalle de temps (T) :
- une comparaison des degrés de pureté et des rendements respectifs obtenus résultant de situations issues d'étapes de simulation sur un intervalle de temps déterminé (Δ*t*) où des rectifications sont appliquées à au moins un débit avec ceux d'une situation de référence issue d'une étape de simulation sans rectification de débit, sur le même intervalle de temps ;
- une sélection des rectifications de débit minimisant la quantité d'impuretés convergeant vers le point de soutirage de l'extrait, tant que le degré de pureté fixé n'est pas atteint ; et
- une sélection des rectifications de débit minimisant la quantité du dit constituant convergeant vers le point de soutirage du raffinat, tant que le rendement fixé n'est pas atteint.

Le procédé peut comporter en outre une maximisation du degré de pureté ou du rendement quand ces deux paramètres dépassent simultanément les valeurs fixées.

Selon un premier mode de mise en oeuvre, à l'issue de chacune des étapes, on compare à la situation de référence, une première situation où l'on modifie le débit de recyclage et une deuxième situation où l'on modifie le débit de l'extrait.

Selon un deuxième mode de mise en oeuvre, à l'issue de chacune des étapes, on compare à la situation de référence, une première situation où l'on modifie de la même quantité le débit de recyclage et le débit d'extrait et une deuxième situation où l'on diminue le débit de l'extrait tout en gardant constant le débit de recyclage.

Le procédé comporte par exemple une détermination du flux net d'impuretés F_{P} passant dans l'extrait venant des deux zones de part et d'autre du point de soutirage de l'extrait ainsi que le flux net F_{R} du dit constituant passant dans le raffinat venant des deux zones de part et d'autre du point de soutirage du raffinat, à partir de flux mesurés dans chacune des quatre zones.

Au lieu d'une multitude de cycles statiques d'optimisation que l'on conduit jusqu'à leur terme à partir d'un jeu initial de modifications de débits, on réalise un seul cycle mais en sollicitant l'optimiseur à des intervalles rapprochés. Par des comparaisons effectuées à chaque pas de temps du cycle, il peut déterminer la combinaison optimale de valeurs de débit la plus appropriée pour atteindre les objectifs de pureté et de rendement. Ainsi, en procédant par retouches successives appliquées à intervalles de temps réduits à l'optimiseur, on obtient rapidement une stabilisation du fonctionnement, bien plus rapide qu'en simulant un cycle complet de stabilisation du système de séparation.

### Présentation des Figures

D'autres caractéristiques et avantages du procédé selon l'invention, apparaîtront à la lecture de la description ci-après d'un exemple non limitatif de réalisation, en se référant aux dessins annexés où :
- la Fig.1 montre schématiquement un système de séparation de type à lit mobile vrai (LMV) ;
- la Fig.2 schématise le cas général où, à un instant t de l'optimisation dynamique opérée suivant le procédé selon l'invention, on compare n situations différentes issues de simulations effectuées sur un intervalle de temps de durée (Δ*t*) résultant de modifications apportées ou non à des débits à optimiser ;
- la Fig.3 schématise un cas particulier où, à un instant t de l'optimisation dynamique opérée suivant le procédé selon l'invention, on compare trois situations différentes résultant de simulations effectuées sur un intervalle de temps de durée (Δ*t*), consécutives à des modifications apportées à deux débits ;
- la Fig.4 est une variante de la Fig.3 schématisant un autre cas où on compare trois situations différentes issues de simulations effectuées consécutives à des modifications combinées de débits ;
- la Fig.5 montre un exemple de profils de séparation obtenus par application du procédé, en fonction de la position des lits de la boucle de séparation ;
- la Fig.6 montre un exemple de variations parallèles en fonction du temps du débit de recyclage Q_{Rec} et du débit d'extrait Q_{Ex}, rapportés au débit de charge Q_{F} ; et
- les Fig. 7A, 7B montrent respectivement des variations locales la pureté P(t) et du rendement R(t) durant la simulation.

### Description détaillée

On considère une boucle de séparation 1 comme celle schématisée à la Fig.1 où il s'agit par exemple d'isoler un extrait tel que du paraxylène Px dans une charge F contenant en outre des polluants tels que de l' orthoxylène Ox, du métaxylène Mx et de l'éthylbenzène Eb.

Pour simuler le fonctionnement de la boucle, on utilise un modèle d'un type connu avec résolution d'équations classiques de simulation par des moyens de calcul conventionnels et des moyens d'optimisation ou optimiseur pour mettre en oeuvre les étapes de sélection selon le procédé. Comme modèle, on peut utiliser par exemple un de ceux décrits par :
- Hassan M.M. et al ; « Modelling of Simulated Moving Bed Adsorption System : a More Precise Approach » in Séparations Technology 5 (1995) 77-89, Elsevier ; ou
- Storti, G. et al ; « Optimal Design of Multicomponent Countercurrent Adsorption Separation Processes involving Nonlinear Equilibria ; in Chemical Engineering Science, vol.44 N° 6 pp.1329-1345, (1989) ; ou
- Ching, C.B. et al « Expérimental and Modelling Studies on the Transient Behavior of a Simulated Countercurrent Adsorber » in Journal of Chemical Engineering of Japan ; vol.24 N°5 pp.614-621, (1991) ; ou
- Rhee, H-K et al: « Multicomponent Adsorption in Continuous Countercurrent Exchangers » vol.269 A. 1194, (1971).

Une observation simple permet de constater que la pureté est augmentée si on réduit la quantité de polluants (Mx, Ox et Eb) qui converge vers l'extrait Ex, soit par l'amont (depuis la zone Z2), soit par l'aval, depuis la zone Z1. De même, le rendement sera augmenté si l'on réduit la quantité de Px arrivant dans le raffinat Raf par l'aval (zone Z3) ou par l'amont (zone Z4).

Il convient de savoir si l'impureté dans l'extrait vient de l'amont, auquel cas il faut augmenter le débit des zones Z2 et Z3, ou de l'aval, auquel cas il faut diminuer le débit des zones Z1 et Z4. Le problème est identique pour le paraxylène Px dans le raffinat Raf qui influence le rendement.

Dans cet exemple, les débits dans les zones Z2 et Z3 sont liés car le débit de la charge F injectée entre elles (imposé par l'opérateur) n'est pas modifié. De même, comme on suppose que le ratio débit de solvant S, débit de charge F est fixé par des considérations d'ordre économique, ce qui impose un certain débit d'éluant S, il s'ensuit que les débits dans les zones Z1 et Z2 sont également liés.

Le principe à la base du procédé, est de réaliser une optimisation dynamique. Au lieu d'effectuer plusieurs simulations successives où l'optimiseur chargé de réaliser les simulations en partant d'un jeu de données d'entrée, conduit à chaque fois les calculs de simulation jusqu'à leur terme (optimisation statique), on n'effectue plus qu'une seule simulation mais en sollicitant l'optimiseur par étapes à intervalles de temps réguliers (T) et ceci tout au long de l'optimisation.

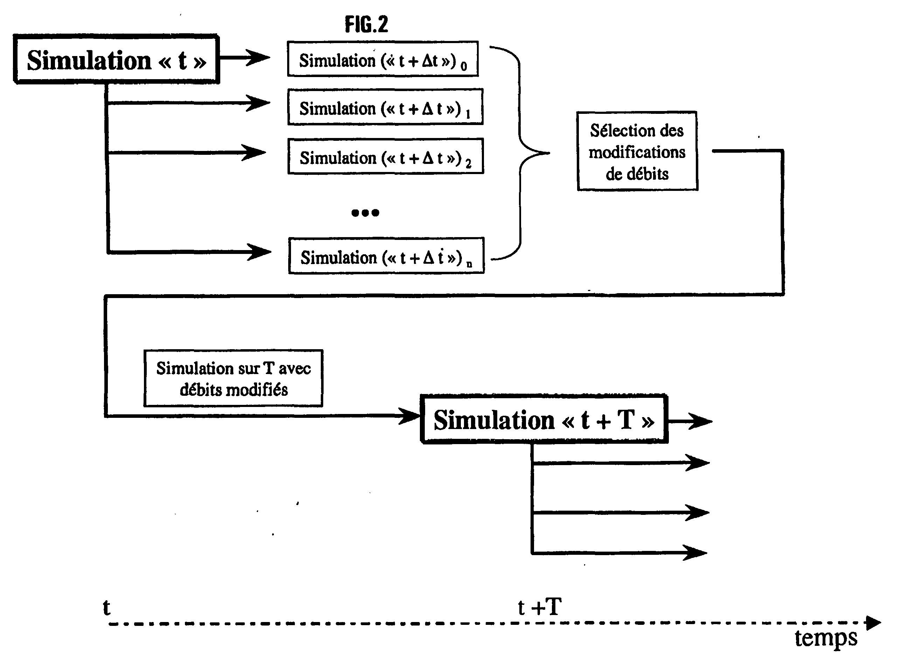

On considère le cas général où il y a n débits à optimiser. Partant d'une situation initiale quelconque Si(t) à un instant t (Fig.2), on poursuit la simulation dynamique sans aucune modification des débits sur une durée suffisante Δ*t* (Δ*t* = 500s par exemple). On obtient une nouvelle situation S₀ (*t*+Δ*t*), l'indice 0 signifiant que les débits n'ont pas été changés. On repart ensuite de la même situation initiale Si(t) et l'on simule l'évolution de la boucle sur la même durée Δ*t* en ayant sensiblement modifié la valeur d'un des débits à optimiser. On parvient à une situation S₁ (*t*+ Δ*t*). En modifiant de même un deuxième débit à optimiser, on aboutit à une situation S₂(*t*+Δ*t*). La même opération est répétée pour chacun des n débits à optimiser et l'on obtient finalement n situations différentes Sᵢ(*t+Δ t*) , avec 1 <i< n. L'optimiseur procède alors à une première sélection. Il détermine les variations ou rectifications qu'il convient d'appliquer aux différentes débits soit pour les augmenter soit pour les réduire, de façon à minimiser la quantité d'impuretés convergeant vers le point de soutirage de l'extrait et la quantité du dit constituant convergeant vers le point de soutirage du raffinat ou autrement dit, à déterminer les meilleurs variations des débits compatibles avec les objectifs de pureté et de rendement fixés.

A partir de ces débits réactualisés et en repartant du même instant inital t, l'opération de simulation précédente est itérée de la même façon, avec comparaison entre la nouvelle situation initiale réactualisée et n autres situations obtenues en modifiant différents débits, à l'issue d'un intervalle de temps *T* de préférence plus long que l'intervalle Δ*t* précédent, de façon à ne pas trop ralentir la simulation. On choisit par exemple Δ*t* = 500 s et *T* = 2000 s.

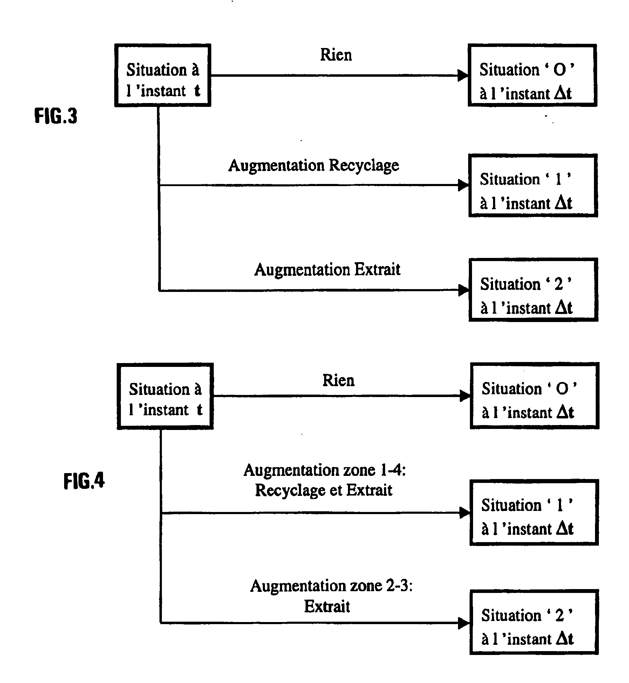

Dans le cas particulier illustré à la Fig. 3, on est amené à comparer à l'instant (t+Δ*t*), trois situations S₀, S₁ et S₂ correspondant respectivement aux cas où aucun débit n'est changé, où seul le débit d'extrait Q_{Ex} est modifié et où seul le débit de recyclage Q_{Rec} a été modifié. L'optimiseur détermine, à l'issue de chaque intervalle de temps, s'il convient d'augmenter ou de réduire chacun de ces débits pour par exemple soit le débit de recyclage Q_{Rec}. mesuré en zone Z1 soit le débit d'extrait Q_{Ex}.

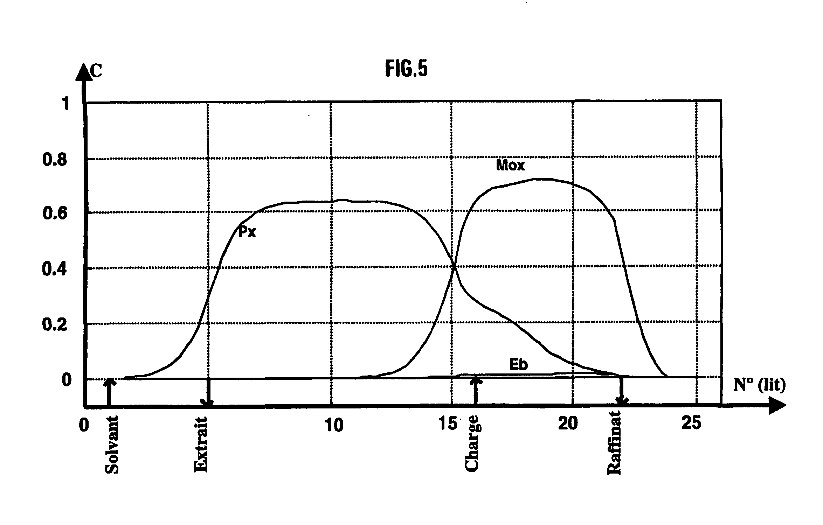

Au lieu de modifier les débits d'extrait Q_{Ex} et de recyclage Q_{Rec}, il est également possible (Fig.4) de modifier les débits des zones Z1 et Z4 et les débits des zones Z2 et Z3, séparément. Pour modifier les débits des seules zones Z1 et Z4, on augmente les débits d'extrait Q_{Ex} et de recyclage Q_{Rec} de la même quantité. Pour modifier les débits dans les seules zones Z2 et Z3, on diminue le débit d'extrait Q_{Ex} et on garde constant le débit de recyclage Q_{Rec}.

L'objectif suivant est de comparer ces situations S₀, S₁ et S₂ pour déterminer quelles modifications de débit il convient de faire et dans quel sens les modifier. En fait, on compare l'écart entre la solution S₀, où rien ne change et les deux autres solutions : augmentation du recyclage S₁ ou augmentation de l'extrait S₂. sachant que, de toute façon, les débits d'extraits et de raffinat sont modifiés.

Si l'objectif de pureté n'est pas atteint, on choisit la variation de chacun des deux débits qui minimise la quantité d'impuretés qui converge vers l'extrait (flux F_{P}). Si l'objectif de rendement n'est pas atteint, on choisit la variation de chacun des deux débits qui minimise la quantité du Px (paraxylène) qui converge vers le raffinat Raf (flux F_{R}). Si les deux sont satisfaits, on choisit d'en maximiser un seul (pureté en « stand-alone » ou rendement en mode hybride).

Si aucun de ces objectifs n'est satisfait, on choisit la combinaison qui permet de réduire le flux net d'impuretés F_{P} et aussi de réduire le flux net F_{R.}

Il faut donc calculer le flux net d'impuretés dans chacune des deux zones Z1 et Z2. La somme de ces flux est le flux qui « passe » dans l'extrait Ex. Il faut aussi calculer le flux net de paraxylène Px provenant de la zone Z3 et celui provenant de la zone Z4 qui « passent » dans le raffinat Raf.

Le choix entre les diverses situations est facilité si l'on définit deux fonctions d'erreur qui sont les deux flux que l'on cherchera à minimiser. Ces fonctions d'erreur mesurent respectivement :
- la quantité d'impureté (Imp_{Ex}) produite dans l'extrait provenant de la zone Z1 plus la quantité d'impureté (Imp_{Ex}) produite dans l'extrait provenant de la zone Z2 ; et
- la quantité de paraxylène (Px_{Raf}) dans le raffinat provenant de la zone Z3 plus la quantité de paraxylène (Px_{Raf}) dans le raffinat provenant de la zone Z4.

Le problème est que ces calculs de flux ne peuvent pas être fait simplement dans le cas d'un procédé à contre courant simulé (CCS) où les points d'injection et de soutirage se déplacent périodiquement. Il faut donc remplacer ce procédé (CCS) par un procédé (CCR) à contre-courant réel, en considérant que le profil de concentration obtenu est celui d'un procédé (CCR).

On calcule les flux nets d'impuretés et de paraxylène Px en un point proche de l'extrait et du raffinat pour chacune des quatre zones, en sommant le débit convectif de fluide, le débit convectif adsorbé (lié à la porosité des lits) et le débit diffusif de fluide (lié au gradient de la concentration).

L'optimiseur ne donne que le sens de variation de chacun d'eux. Aussi, en début de simulation, on applique de préférence des variations importantes de quelques % à chaque nouvelle sollicitation de l'optimiseur, ceci afin d'arriver rapidement à un réglage grossier. Et puis, au fur et à mesure que progresse la simulation, on réduit l'amplitude de ces variations de façon à converger vers une situation où chacun des débits ne variera quasiment plus, comme on peut l'observer sur la Fig.6.

### Exemple

On comprendra mieux l'intérêt du procédé selon l'invention en considérant l'exemple suivant.

On suppose une unité de séparation composée de 24 lits. Le solvant E1 est injecté en tête du lit 1, l'extrait Ex est soutiré en tête du lit 5, la charge F est injectée en tête du lit 16 et le raffinat Raf est soutiré en tête du lit 22. Ces positions d'injection ou d'extraction délimitent les quatre zones, Z1, Z2, Z3 et Z4.

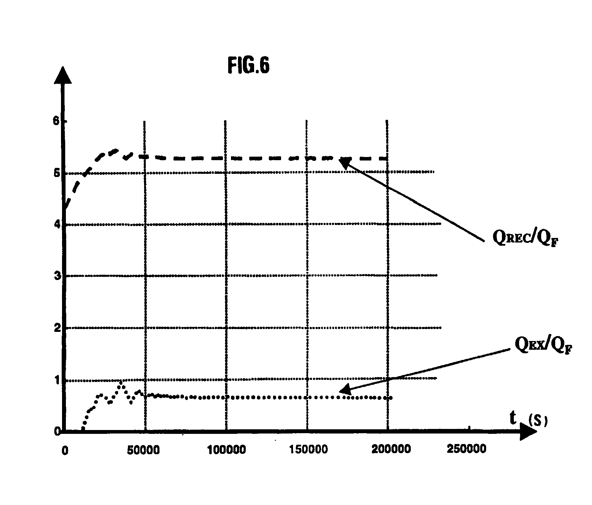

La Fig.5 présente les profils de concentration en paraxylène (Px), méta et orthoxylènes (Mox) et en ethylbenzène (Eb).

Les débits optimisés sont les débits de recyclage Q_{Rec} (calculé en zone Z1) et d'extrait Q_{Ex}. Les débits de charge Q_{F} et d'éluant Q_{El} sont imposés, celui de raffinat Q_{Raf} se déduit en faisant le bilan matière.

On remarque sur la Fig.5 que l'optimiseur a permis d'obtenir un réglage des débits tel que la séparation du Px et du Mox est effective. On voit que la quantité de Mox (Mx et Ox) et de Eb qui « passe » dans l'extrait du lit 5 est presque nulle. De même la quantité de Px qui « passe » dans le raffinat du lit 22 est faible. Pour cela, l'optimiseur a modifié le débit d'extrait et de recyclage en zone Z1 (Fig.6).

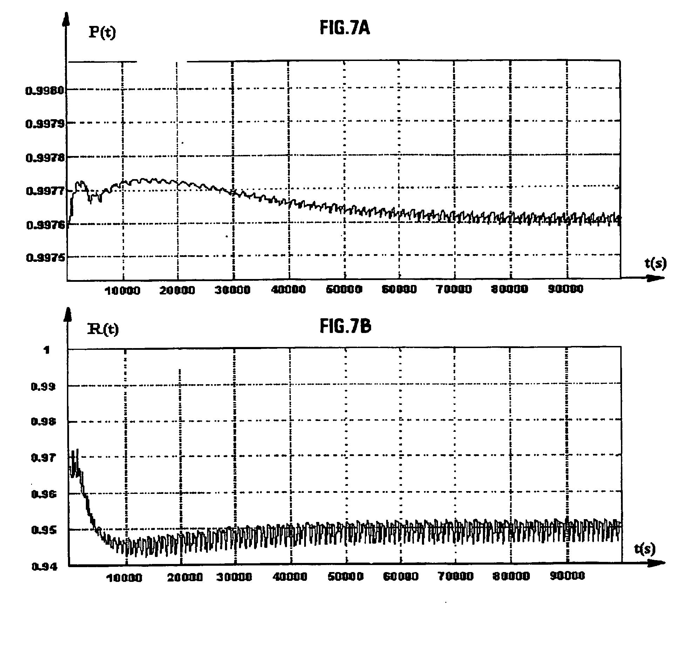

Les Fig.7A, 7B montrent les évolutions parallèles obtenues au cours d'une optimisation, de la pureté (Fig.7A) et du rendement R (Fig.7B). La valeur de consigne de la pureté est Pc=0.9975 et celle du rendement Rc, de 0.95. On voit que la valeur moyenne du rendement R est en accord avec la valeur de consigne Rc alors que la pureté P a pu être maximisée (0.9976), au delà de la valeur de consigne Pc.

Le procédé a été décrit en relation avec une boucle de séparation comportant classiquement quatre zones. Il est bien clair cependant qu'il peut s'appliquer à une boucle comportant un nombre différent de zones.

## Revendications

1. Procédé de contrôle d'un système de séparation à lit mobile simulé comprenant un ensemble de lits contenant de la matière solide adsorbante, répartis en plusieurs zones (Z1 à Z4) délimitées par des points d'injection d'une charge (F) et d'un éluant (E1) et des points de soutirage d'un extrait (Ex.) et d'un raffinat (Raf.), des moyens d'injection de fluides, des moyens d'extraction de fluides, des moyens de permutation des points d'injection et des points d'extraction, et des moyens de mesure de variables opératoires, permettant de déterminer les débits de fluides injectés et les débits de fluides soutirés optimaux pour obtenir un degré de pureté (P) et un rendement d'extraction (R) fixés pour au moins un constituant dans l'extrait (Ex), **caractérisé en ce qu'**on réalise une simulation du fonctionnement dudit système de séparation jusqu'à obtenir un régime stabilisé incluant une optimisation dynamique comportant une succession d'étapes de rectification des débits de fluides à intervalles de temps de durée limitée, comprenant chacune :
- une comparaison des degrés de pureté (P) et des rendements (R) respectifs, obtenus à l'issue d'étapes de simulation (*S*_{*i*}(*t*+Δ*t*)) où des modifications sont appliquées à au moins un débit de fluides, avec ceux obtenus dans une situation de référence (*S*₀(*t*+Δ*t*)) à l'issue d'une étape de simulation sans rectification de débit d'une situation initiale *S*_{*i*}(*t*), sur le même intervalle de temps (Δ*t*) ;
- une sélection, à partir desdites comparaisons, des rectifications de débit de fluides à appliquer audit système de séparation pour minimiser la quantité d'impuretés convergeant vers le point de soutirage de l'extrait, tant que le degré de pureté fixé n'est pas atteint ; et
- une sélection, à partir desdites comparaisons, des rectifications de débit de fluides à appliquer audit système de séparation pour minimiser la quantité dudit constituant convergeant vers le point de soutirage du raffinat (Raf), tant que le rendement fixé n'est pas atteint ;
- on calcule une situation initiale mise à jour *S*_{*i*}*(t)* basée sur les rectifications de débits sélectionnés.

2. Procédé selon la revendication 1, **caractérisé en ce qu'**il comporte en outre une optimisation du degré de pureté (P) et du rendement (R) quand ces deux paramètres dépassent simultanément les valeurs fixées (P₀, R₀).

3. Procédé selon l'une des revendications précédentes, **caractérisé en ce que**, à l'issue de chacune des étapes, on compare à la situation de référence (S₀(*t*+Δ*t*)), une première situation où l'on modifie le débit de recyclage (Q_{Rec}.) et une deuxième situation où l'on modifie le débit de l'extrait (Q_{Ex}).

4. Procédé selon l'une des revendications précédentes, **caractérisé en ce que**, à l'issue de chacune des étapes, on compare à la situation de référence (S₀*(t* + Δ*t*)), une première situation où l'on modifie de la même quantité le débit de recyclage (Q_{Rec.}) et le débit d'extrait (Q_{Ex}) et une deuxième situation où l'on diminue le débit de l'extrait (Q_{Ex}) tout en gardant constant le débit de recyclage (Q_{Rec}).

5. Procédé selon l'une des revendications précédentes, **caractérisé en ce que** l'on détermine le flux net d'impuretés passant dans l'extrait venant des deux zones (Z1, Z2) de part et d'autre du point de soutirage de l'extrait ainsi que le flux net du dit constituant passant dans le raffinat venant des deux zones de part et d'autre du point de soutirage du raffinat, à partir de flux mesurés dans chacune des quatre zones. (Z1 à Z4).

6. Procédé selon la revendication 5, **caractérisé en ce que** l'on détermine les dits flux nets en considérant que le profil de concentration obtenu est celui que l'on obtiendrait avec un système de séparation à contre-courant réel (CCR).

7. Procédé selon l'une des revendications précédentes, **caractérisé en ce que** l'on modifie le débit d'un autre flux que l'on cherche à minimiser.

8. Procédé selon la revendication 7, **caractérisé en ce que** l'on modifie le flux d'éluant.

## Patentansprüche

1. Verfahren zur Regelung eines Trennsystems mit simuliertem beweglichen Bett, umfassend eine Anordnung von Betten, die Festkörperadsorptionsmaterial enthalten, verteilt in mehreren Zonen (Z1 bis Z4), die durch Einspritzpunkte einer Beschickung (F) und eines Elutionsmittels (EI) und Abzugspunkten eines Extrakts (Ex.) und eines Raffinats (Raf.) begrenzt sind, Injektionsmittel von Fluiden, Abzugsmittel von Fluiden, Permutationsmittel der Injektionspunkte und Extraktionspunkte und Messmittel von Betriebsvariablen, die es ermöglichen, die Durchsätze von eingespritzten Fluiden und Durchsätze von abgezogenen Fluiden, welche optimal sind, zu bestimmen, um einen Reinheitsgrad (P) und eine Extraktionsausbeute (R) zu erhalten, die für wenigstens einen Bestandteil des Extrakts (Ex.) festgelegt sind, **dadurch gekennzeichnet, dass**
man eine Simulation der Funktion des Trennsystems durchführt, bis ein stabilisierter Lauf erhalten wird, einschließlich einer dynamischen Optimierung, die eine Abfolge von Rektifikationsstufen der Fluiddurchsätze bei Zeitintervallen von begrenzter Dauer umfasst, jede umfassend:
- einen Vergleich der Reinheitsgrade (P) und der jeweiligen Ausbeuten (R), erhalten aus Simulationsstufen *(S*_{*i*}*(t* + *Δt)),* wobei die Modifikationen auf wenigstens einen Durchsatz von Fluiden angewandt werden mit jenen, die in einer Referenzsituation *((S*_{*0*}*(t* + *Δt))* erhalten werden aus einer Simulationsstufe ohne Rektifikation an Durchsatz von einer Anfangssituation *S*_{*i*}*(t)* auf demselben Zeitintervall *(Δt);*
- eine Auswahl ausgehend von den Vergleichen der Rektifikationen eines Durchsatzes von Fluiden, die anzuwenden sind auf das Trennsystem, um die Menge von Verunreinigungen zu minimieren, die zum Abzugspunkt des Extrakts konvergieren, soweit der festgelegte Reinheitsgrad nicht erreicht wird; und
- eine Auswahl aus den Vergleichen der Rektifikationen an Durchsatz von Fluiden, die auf das Trennsystem anzuwenden sind, um die Menge des konvergierenden Bestandteils zum Abzugspunkt des Raffinats (Raf) zu minimieren, soweit die festgelegte Ausbeute nicht erreicht wird;
- man berechnet eine aktualisierte Anfangssituation *S*_{*i*}*(t)* basierend auf den Rektifikationen ausgewählter Durchsätze.

2. Verfahren nach Anspruch 1, **dadurch gekennzeichnet, dass** es außerdem eine Optimierung des Reinheitsgrads (P) und der Ausbeute (R) umfasst, wenn diese beiden Parameter gleichzeitig festgelegte Werte (P₀, R₀) überschreiten.

3. Verfahren nach einem der vorhergehenden Ansprüche, **dadurch gekennzeichnet, dass** man aus jeder Stufe zur Referenzsituation *(S*_{*0*}*(t* + *Δt))* eine erste Situation vergleicht, worin man den Rezyklierungsdurchsatz (Q_{Rec.}) modifiziert und eine zweite Situation, worin man den Extraktdurchsatz (Q_{Ex}) modifziert.

4. Verfahren nach einem der vorhergehenden Ansprüche, **dadurch gekennzeichnet, dass** man aus jeder der Stufen zur Referenzsituation (*S*_{*0*}*(t* + *Δt)),* eine erste Situation vergleicht, wo man die gleiche Menge des Rezyklierungsdurchsatzes (Q_{Rec.}) modifiziert und der Extraktdurchsatz (Q_{Ex}) und eine zweite Situation, wo man den Extraktdurchsatz (Q_{Ex}) unter Konstanthalten des Rezyklierungsdurchsatzes (Q_{Rec}) vermindert.

5. Verfahren nach einem der vorhergehenden Ansprüche, **dadurch gekennzeichnet, dass** man den Nettostrom an Verunreinigungen, die in dem Extrakt laufen, das von den beiden Zonen (Z1, Z2) beiderseits des Abzugspunkts des Extrakts kommt, sowie den Nettofluss des Bestandteils, der in dem Raffinat läuft, das von den beiden Zonen beiderseits des Abzugspunkts des Raffinats kommt, aus Strömen bestimmt, die in jeder der vier Zonen (Z1 bis Z4) gemessen werden.

6. Verfahren nach Anspruch 5, **dadurch gekennzeichnet, dass** man die Nettoströme vergleicht unter Berücksichtigung, dass das erhaltene Konzentrationsprofil jenes ist, das man mit einem Trennsystem bei reellem Gegenstrom (CCR) erhalten würde.

7. Verfahren nach einem der vorhergehenden Ansprüche, **dadurch gekennzeichnet, dass** man den Durchsatz eines anderen Stroms modifiziert als jenen, den man zu minimieren wünscht.

8. Verfahren nach Anspruch 7, **dadurch gekennzeichnet, dass** man den Elutionsmittelstrom modifiziert.

## Claims

1. Process for control of a separation system with a simulated moving bed comprising a set of beds containing adsorbent solid material, distributed over a plurality of zones (Z1 to Z4) defined by points for injection of a feed-stock (F) and an eluent (E1) and points for drawing off an extract (Ex.) and a raffinate (Raf.), means for injection of fluids, means for extraction of fluids, means for permutation of the injection points and of the extraction points, and means for measuring process variables, permitting determination of the optimal flow-rates of injected fluids and flow rates of fluids drawn off to obtain a fixed degree of purity (P) and extraction yield (R) for at least one component in the extract (Ex), **characterised by** the fact that a simulation of the said separation system is performed until stabilised operating conditions are obtained including dynamic optimisation including a series of steps of correction of the flow-rates of fluids at time intervals of limited duration, each comprising:
- comparison of the respective degrees of purity (P) and yields (R) obtained on completion of simulation steps (Sᵢ(t+Δt)) in which modifications are applied to at least one flow-rate of fluids, with those obtained in a reference situation (S₀(t+Δt)) on completion of a simulation step without correction of flow-rate from an initial situation Sᵢ(t), over the same time interval (Δt);
- selection, from the said comparisons, of corrections to the flow-rates of fluids to be applied to the said separation system to minimise the quantity of impurities converging on the extract draw-off point, while the fixed degree of purity has not been attained; and
- selection, from the said comparisons, of the corrections to flow-rates of fluids to be applied to the said separation system to minimise the quantity of the said component converging on the raffinate (Raf) draw-off point, while the fixed yield has not been attained;
- an updated initial situation Sᵢ(t) is calculated based on the selected flow-rate corrections.

2. Process as described in claim 1, **characterised by** the fact that it also includes optimisation of the degree of purity (P) and of the yield (R) when these two parameters simultaneously exceed the fixed values (P₀, R₀).

3. Process as described in one of the preceding claims, **characterised by** the fact that, on completion of each of the steps, with the reference situation (S₀(t+Δt)) is compared a first situation in which the recycling flow-rate (Q_{Rec}.) is modified and a second situation in which the extract flow-rate (Q_{Ex}) is modified.

4. Process as described in one of the preceding claims, **characterised by** the fact that, on completion of each of the steps, with the reference situation (S₀(t+Δt)) is compared a first situation in which the recycling flow-rate (Q_{Rec}.) and the extract flow-rate (Q_{Ex}) are modified by the same amount and a second situation in which the extract flow-rate (Q_{Ex}) is decreased while the recycling flow-rate (Q_{Rec}) is kept constant.

5. Process as described in one of the preceding claims, **characterised by** the fact that the net flow of impurities passing in the extract coming from the two zones (Z1, Z2) on either side of the extract draw-off point and the net flow of the said component passing in the raffinate coming from the two zones on either side of the raffinate draw-off point are determined, from flows measured in each of the four zones (Z1 to Z4).

6. Process as described in claim 5, **characterised by** the fact that the said net flows are determined considering that the concentration profile obtained is that which would be obtained with a real countercurrent separation system (CCR).

7. Process as described in one of the preceding claims, **characterised by** the fact that the flow-rate of another flow which is required to be minimised is modified.

8. Process as described in claim 7, **characterised by** the fact that the eluent flow is modified.
